# EUROPÄISCHE PATENTSCHRIFT

(11) **EP 2 771 090 B1**
(45) Veröffentlichungstag und Bekanntmachung des Hinweises auf die Patenterteilung: **19.07.2017**
(21) Anmeldenummer: 12775143.6
(22) Anmeldetag: 12.10.2012
(51) Int. Cl.: B01D 29/11, B01D 46/00, B01D 46/52, B31F 1/00, B65H 45/20, D06J 1/06

(54) **VERFAHREN ZUM HERSTELLEN EINES FILTERMATERIALS UND MESSERFALTMASCHINE**
METHOD FOR PRODUCING A FILTER MATERIAL AND BLADE PLEATING MACHINE
PROCÉDÉ DE FABRICATION D'UN MATÉRIAU DE FILTRATION ET PLIEUSE À COUTEAUX

(30) Priorität: 26.10.2011 DE 102011116947
(43) Veröffentlichungstag der Anmeldung: 03.09.2014
(73) Patentinhaber: Hydac Filtertechnik GmbH, 66280 Sulzbach/Saar (DE)
(72) Erfinder: DEWES, Markus, 66649 Oberthal (DE)
(74) Vertreter: Bartels, Martin Erich Arthur
(86) Internationale Anmeldenummer: PCT/EP2012/004289
(87) Internationale Veröffentlichungsnummer: WO 2013/060423

(56) Entgegenhaltungen:
- EP-A1- 1 952 873
- DE-A1- 19 743 890
- DE-A1-102004 025 501
- DE-A1-102010 011 785

## Beschreibung

Die Erfindung betrifft ein Verfahren zum Herstellen eines Filtermaterials, insbesondere für Hydraulikanlagen, bei dem eine aus zumindest einer Lage eines Filtermediums bestehende Filtermatte mit aufeinanderfolgenden Falten versehen wird, indem Faltmesser gegeneinander bewegt werden, die zur Bildung eines jeweiligen Faltengrundes an der Filtermatte angreifen. Die Erfindung betrifft ferner eine Messerfaltmaschine.

Filtermaterialien werden in einer Vielzahl von Ausführungsformen zum Abscheiden von Feststoff-Partikeln aus flüssigen Medienströmen oder zum Abscheiden von Staubpartikeln aus einem mit Staubpartikeln beladenen Gasstrom verwendet. Die abzuscheidenden Partikel-Verschmutzungen stören industrielle Prozesse oder den Betrieb von Hydrauliksystemen und beschleunigen den Verschleiß von Maschinen und Anlagen.

Filtermaterialien aus einer gefalteten oder plissierten Filtermatte werden üblicherweise aus mehrlagigen Filtermedien mittels Messerfaltmaschinen in der Weise hergestellt, dass jeweils zwei Faltmesser gegenläufig an der Einwirkungsstelle der Filtermatte jeweils einen Faltengrund bilden. Wenn derartige Filtermaterialien bei Filterelementen zum Einsatz kommen, dann ist es aus Sicherheitsgründen und auch aus wirtschaftlichen Gründen heraus erforderlich, dass die im Einsatz befindlichen Filterelemente über die vorgesehenen Einsatzzeiten hinweg ihre volle Leistungsfähigkeit erbringen. Fehlfunktionen der Filterelemente würden Betriebsstörungen bis hin zum Ausfall der zugehörigen Anlagen verursachen, was, insbesondere bei höherwertigen Anlagen, zu beträchtlichen wirtschaftlichen Schäden führen kann. Beim Betrieb von Filterelementen mit plissierten oder sterngefalteten Filtermaterialien ist eine mögliche Ursache einer Fehlfunktion darin zu sehen, dass beim Durchströmen der gefalteten Struktur des Filtermaterials dieses, beispielsweise durch Volumenschwankung und Vibration, lokalen Beanspruchungen ausgesetzt ist. Dadurch kann es zu Verformungen der Faltenstruktur und dadurch verursachten örtlichen Blockbildungen der Falten kommen, wodurch vereinzelte Areale der Filterfläche miteinander verblockt werden, so dass an diesen Bereichen kein oder nur ein geringer Durchfluss mit entsprechend geringer Schmutzaufnahme mehr stattfindet. Außerdem können Relativbewegungen zwischen einzelnen Lagen des Filtermaterials verursacht werden. Ein Lösungsvorschlag zur Behebung dieser Fehlerquellen, der in DE 10 2004 054 245 A1 offenbart ist, zielt diesbezüglich auf eine Stabilisierung der Faltengeometrie bei einem gefalteten Filtermaterial ab, das in Form eines Hohlzylinders Bestandteil eines Filterelements ist. Zu diesem Zweck sind bei der bekannten Lösung Stabilisiermittel in Form bandförmiger Ringelemente vorgesehen, die um die Außenseite des Filtermaterials herumgelegt sind, wobei als Fixiermittel an den Innenseiten der Bänder Verbindungsstellen mit den anliegenden Faltenrücken des Filtermaterials gebildet sind. Die Verbindungsstellen sind jeweils durch Schweißstellen gebildet, an denen durch thermischen Prozess die Werkstoffe der äußeren Lage des Filtermaterials und des anliegenden Bandes miteinander verschmolzen sind.

Bei der großen Anzahl plissierter Falten des Filtermaterials müssen in einem gesonderten Fertigungsschritt, der nach dem Faltprozess bei der Herstellung der Filtermatte und nach dem Bilden des Hohlzylinders aus der Filtermatte durchzuführen ist, eine Vielzahl von Schweißvorgängen ausgeführt werden, was die Herstellung kompliziert und verteuert.

Die DE 197 43 890 A1, die DE 10 2010 011 785 A1 und die EP 1 952 873 A1 offenbaren jeweils Verfahren zum Herstellen eines Filtermaterials, insbesondere für Hydraulikanlagen, bei dem eine aus zumindest einer Lage eines Filtermediums bestehende Filtermatte mit aufeinanderfolgenden Falten versehen wird, indem Faltelemente gegeneinander bewegt werden, die zur Bildung eines jeweiligen Faltengrundes an der Filtermatte angreifen. Die Faltenkanten werden vor oder nach dem Faltprozess durch Ultraschallschweißen behandelt.

Ausgehend von diesem Stand der Technik stellt sich die Erfindung die Aufgabe, ein Verfahren anzugeben, das eine einfache und rationellere Fertigung von Filtermaterialien der betrachteten Art ermöglicht und darüber hinaus eine verbesserte Stabilisierung der Faltengeometrie und dadurch eine hohe Beta-Wert Stabilität gewährleistet, sowie eine Messerfaltmaschine.

Der verfahrensmäßige Teil der Aufgabe ist erfindungsgemäß durch ein Verfahren gelöst, das die Maßnahmen des Patentanspruchs 1 in seiner Gesamtheit aufweist. Der auf die Messerfaltmaschine bezogene Teil der Aufgabe wird durch eine Messerfaltmaschine mit den Merkmalen von Anspruch 10 gelöst. Vorteilhafte Ausführungsformen und Weiterbildungen der Erfindung gehen aus den Unteransprüchen hervor.

Nach dem kennzeichnenden Teil des Anspruchs 1 besteht eine wesentliche Besonderheit der Erfindung darin, dass bei der Bildung zumindest eines Teils der Falten eine Schweißverbindung zwischen Faltengrund und Faltenrücken, vorzugsweise durch Ultraschallenergie gebildet wird, die zwischen dem betreffenden Faltmesser und einem am jeweiligen Faltenrücken befindlichen Gegenelement wirksam ist. Dadurch, dass dergestalt der Faltvorgang mit einem gleichzeitig stattfindenden Schweißvorgang kombiniert ist und somit Faltenbildung und die Stabilisierung der Faltenstruktur in einem einzigen Arbeitsgang erfolgt, erübrigen sich die zusätzlichen Arbeitsschritte, wie sie beim Stand der Technik zur Stabilisierung der Faltengeometrie durchgeführt werden, wie das Bereitstellen und Anlegen der Stabilisierbänder mit anschließendem Herstellen der Schweißstellen am Filtermaterial, wie dies bei der erwähnten bekannten Lösung erforderlich ist.

Vorzugsweise wird so vorgegangen, dass die Ultraschallenergie mittels einer am Faltmesser befindlichen Sonotrode erzeugt wird, und dass die Faltmesser für die Schweißverbindungen gegen einen am gebildeten Faltenrücken anliegenden Amboss bewegt werden.

Dadurch, dass die Faltmesser gleichzeitig die Funktion einer Sonotrode erfüllen, können Schweißverbindungen ohne weiteres an sämtlichen der aufeinanderfolgenden Falten gebildet werden, wodurch eine besonders gute stabilisierende Wirkung erreicht wird und Relativbewegungen von Einzellagen des Filtermaterials sicher verhindert werden.

Vorzugsweise ist die Sonotrode an den Faltmessern so gestaltet, dass Schweißverbindungen längs zumindest eines Teils, vorzugsweise eines Großteils, der Länge von Faltenrücken und -grund gebildet werden.

Nachstehend ist die Erfindung anhand der Zeichnung im Einzelnen erläutert. Es zeigen:
- Fig. 1: eine schematische, skizzenhafte Darstellung der üblichen Verfahrensweise beim Falten einer Filtermatte mittels einer Messerfaltmaschine;
- Fig. 2: eine der Fig. 1 entsprechende, jedoch die erfindungsgemäße Verfahrensweise zeigende Darstellung;
- Fig. 3: eine perspektivische Schrägansicht eines Ausführungsbeispiels des nach dem erfindungsgemäßen Verfahren hergestellten Filtermaterials, das zu einem Hohlzylinder für ein Filterelement in Form einer Art Filterpatrone geformt ist; und
- Fig. 4: in der Art einer Rasterelektronen-Mikroskopieaufnahme einen Teilausschnitt aus dem erfindungsgemäßen Filtermaterial.

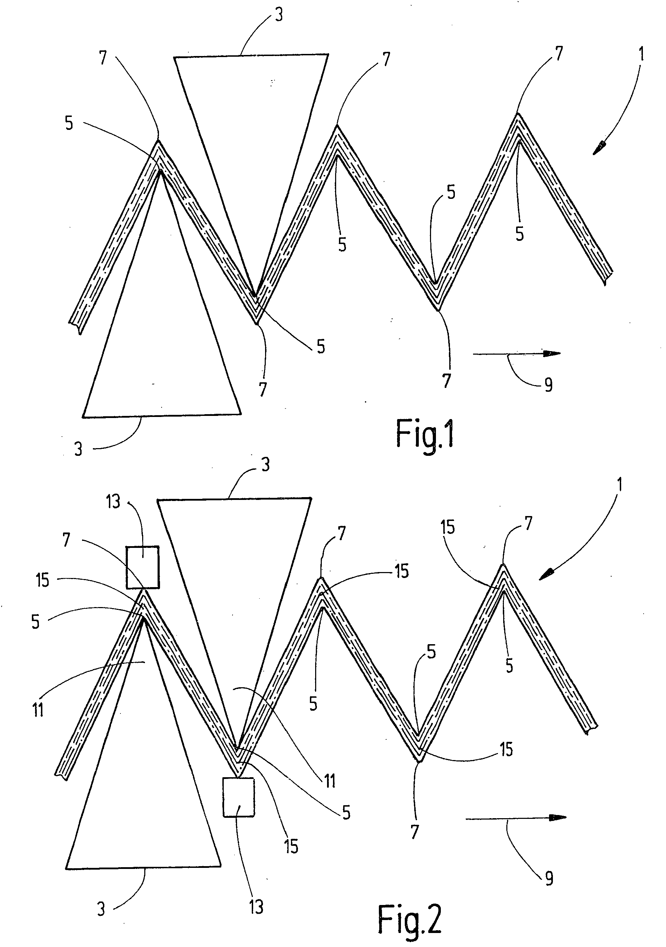

Die Fig. 1 und 2 verdeutlichen jeweils den Vorgang der Faltenbildung an einer Filtermatte 1 mittels einer Messerfaltmaschine mit gegenläufig bewegbaren Faltmessern 3, wobei in Fig. 1 die dem Stand der Technik entsprechende Verfahrensweise gezeigt ist und in Fig. 2 ein Ausführungsbeispiel des erfindungsgemäßen Verfahrens dargestellt ist. Wie in Fig. 1 und 2 mit durchgezogenen, gestrichelten und strichpunktierten Linien angedeutet ist, ist die Filtermatte 1 aus mehreren Einzellagen von Filtermedien aufgebaut, wobei es sich um einen metallfreien Aufbau handelt, worauf unten noch eingegangen wird. Bei der gegenläufigen Bewegung der Faltmesser 3 bilden diese beim Angriff an der Filtermatte 1 jeweils einen Faltengrund 5 mit dazu gegenüberliegendem Faltenrücken 7, während die Filtermatte 1 in der mit Pfeil 9 angedeuteten Vorschubrichtung bewegt wird.

Bei der Durchführung des erfindungsgemäßen Verfahrens erfüllt jedes Faltmesser 3, siehe Fig. 2, die Funktion einer Sonotrode 11 und bewegt bei der in der in den Figuren gezeigten Faltposition den gebildeten Faltenrücken 7 an Gegenelement 13 in Forme eines Ambosses. Durch die zwischen Sonotrode 11 und Amboss 13 wirksame, die Filtermatte 1 zwischen Faltengrund 5 und Faltenrücken 7 durchdringende Ultraschallenergie wird zwischen Faltengrund 5 und Faltenrücken 7 eine Schweißverbindung 15 durch Verschmelzen der Filtermattenlagen gebildet. Dadurch, dass so die Einzellagen miteinander verbunden werden, ist die Struktur der so "verschweißten" Filtermatte wesentlich versteift. Relativbewegungen der Einzellagen untereinander sind stark gehemmt. Durch die so erreichte Stabilisierung der Faltengeometrie ist das Filtermaterial gegenüber Strömungsbelastungen beim Filtrationsbetrieb widerstandsfähig.

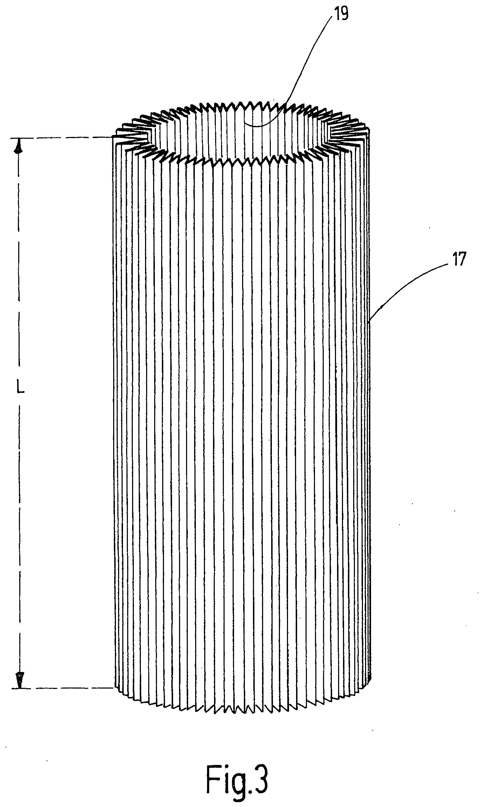

Zu einem Hohlzylinder 17 geformt, wie er in Fig. 3 dargestellt ist, lässt sich das Filtermaterial mit Vorteil bei Filterelementen in der Art von Filterpatronen einsetzen. Hierbei kann der Hohlzylinder 17, wie bei derartigen Filterelementen üblich, ein in seinem Innenraum 19 befindliches Stützrohr umgeben, das wie die übrigen Bestandteile eines derartigen Filterelements in Fig. 3 nicht dargestellt ist, da diese Bauelemente dem Stand der Technik entsprechen können. Dank der erfindungsgemäßen "Verschweißung" zwischen Faltengrund 5 und Faltenrücken 7 zeichnen sich derartige Filterelemente im Betrieb durch eine verbesserte Beta-Wert Stabilität aus.

Bei der Durchführung des erfindungsgemäßen Verfahrens können die Sonotroden 11 so getaktet werden, dass bei jedem Faltvorgang der Schweißvorgang stattfindet, so dass sämtliche aufeinanderfolgenden Falten der Filtermatte 1 zwischen Faltengrund 5 und Faltenrücken 7 verschweißt werden. Ebenso kann durch entsprechende Taktung ein Schweißvorgang an gewünschten Falten unterbleiben. Vorzugsweise sind die Sonotroden 11 und der jeweilige Amboss 13 leistenartig ausgebildet, so dass die Schweißverbindungen 15 über Teile der axialen Länge L (Fig. 3) durchgehend gebildet werden, vorzugsweise über die gesamte Länge L oder einen Großteil derselben. Alternativ könnten in ausgewählten, voneinander getrennten Längenbereichen die Schweißverbindungen 15 gebildet werden.

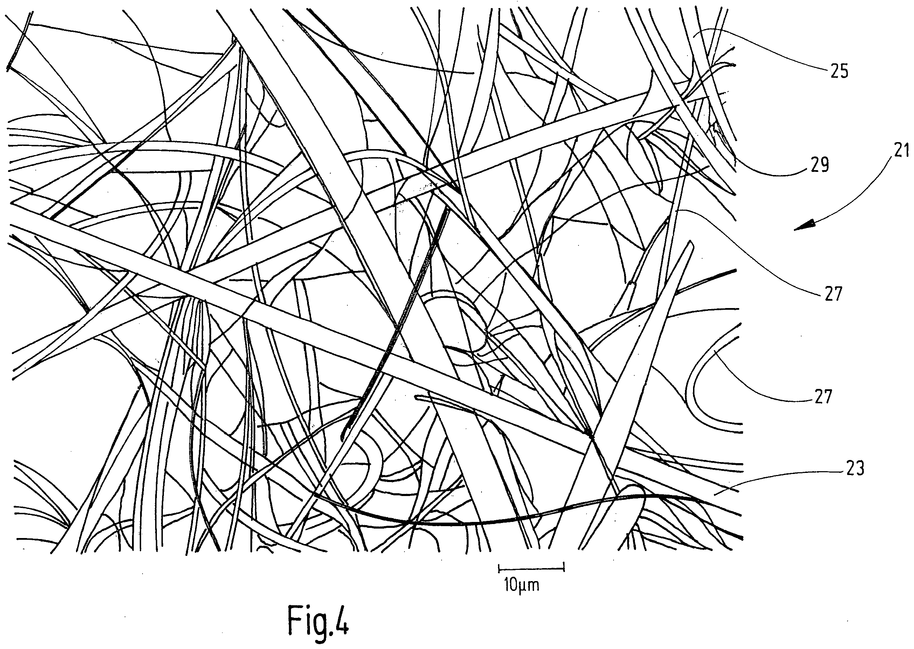

Wie bereits erwähnt, ist die Filtermatte 1 mehrlagig aufgebaut, wobei in Abfolge beispielsweise ein Stützgitter, ein Vliesmaterial, ein Fasermaterial, ein Vliesmaterial und ein Stützgitter vorgesehen sein können. In besonders vorteilhafter Weise kann es sich bei einer Fasermateriallage um eine Einzellage 21 handeln, deren Struktur in Fig. 4 in der Art einer Rasterelektronen-Mikroskopieaufnahme dargestellt ist. Die Lage 21 besteht im Wesentlichen aus einem Verbund von chaotisch übereinandergelegten Glasfasern 23 und Kohlenstoff-Fasern 25. Die Glasfasern 23 und die Kohlenstoff-Fasern 25 sind sowohl in Bezug auf ihren Längsachsenverlauf in parallelen Ebenen zueinander, als auch in zu der Bildebene in Fig. 1 winkeligem Verlauf angeordnet. Der Anteil an Kohlenstoff-Fasern 25 in dem Verbund ist dabei geringer als der Anteil an Glasfasern 23. Die Glasfasern 23 sind aus einem mineralischen Glas, aus Borosilikat-Glas, gebildet. Der Verbund weist ferner zusätzliche Anteile an Schmelzfasern 27 aus Kunststoff auf, insbesondere aus Polyethylen, Polyamid und Polypropylen. Die Schmelzfasern 27 sind, wie gezeigt, insbesondere als Bindeglieder zwischen den Glasfasern 23 und Kohlenstoff-Fasern 25 in dem Material eingesetzt. Zu diesem Zweck sind die Schmelzfasern 27 so angeordnet, dass sie die Glasfasern 23 und die Kohlenstoff-Fasern 25 an jeweils mehreren Stellen umschlingen oder umfassen und, sich über einen Tiefenbereich des Materials erstreckend, Bindeglieder in jeder Raumrichtung des Materials bilden. Die Verbindung der Schmelzfasern 27 mit den Glasfasern 23 und den Kohlenstoff-Fasern 25 wird durch Zusatzstoffe 29, wie flüssiges und auspolymerisierendes Acrylatharz oder Epoxydharz oder auch ein geeignetes polymerisierendes Elastomer, die in die chaotische Matrix eingegeben werden, verbessert. Ein Vorteil, der durch einen derartigen Verbund mit Kohlenstoff-Fasern erwächst, besteht darin, dass beim Durchströmen des Filtermaterials vorzugsweise keine Ladungstrennung, also auch keine elektrostatischen Potentiale entstehen. Sofern ein das Filtermaterial anströmendes Medium bereits Potentialunterschiede aufweist, sind die Kohlenstoff-Fasern 25 in der Lage, aufgrund ihrer räumlichen Anordnung in dem Material eine kontinuierliche Ableitstrecke, insbesondere eine Mehrzahl an Ableitstrecken für elektrostatische Ladungen zu bilden. Die Vermeidung elektrostatischer Aufladungen vermeidet die Gefahr, dass es zu einer erhöhten Alterung bei Hydrauliköl und zu ungewollten Entladungen, die das Filtermaterial schädigen können, kommt.

## Patentansprüche

1. Verfahren zum Herstellen eines Filtermaterials, insbesondere für Hydraulikanlagen, bei dem eine aus zumindest einer Lage (21) eines Filtermediums bestehende Filtermatte (1) mit aufeinanderfolgenden Falten versehen wird, indem Faltmesser (3) gegeneinander bewegt werden, die zur Bildung eines jeweiligen Faltengrundes (5) an der Filtermatte (1) angreifen, **dadurch gekennzeichnet, dass** bei der Bildung zumindest eines Teils der Falten eine Schweißverbindung zwischen Faltengrund (5) und Faltenrücken (7) durch Ultraschallenergie gebildet wird, die zwischen dem betreffenden Faltmesser (3) und einem am jeweiligen Faltenrücken (7) befindlichen Gegenelement (13) wirksam ist.

2. Verfahren nach Anspruch 1, **dadurch gekennzeichnet, dass** die Ultraschallenergie mittels einer am Faltmesser (3) befindlichen Sonotrode (11) erzeugt wird.

3. Verfahren nach Anspruch 1 oder 2, **dadurch gekennzeichnet, dass** die Faltmesser (3) für die Schweißverbindungen gegen einen am gebildeten Faltenrücken (7) anliegenden Amboss (13) als Gegenelement bewegt werden.

4. Verfahren nach einem der vorstehenden Ansprüche, **dadurch gekennzeichnet, dass** die Schweißverbindungen an sämtlichen der aufeinanderfolgenden Falten gebildet werden.

5. Verfahren nach einem der vorstehenden Ansprüche, **dadurch gekennzeichnet, dass** Schweißverbindungen längs zumindest eines Teils, vorzugsweise eines Großteils, der Länge (L) von Faltenrücken (7) und Faltengrund (5) gebildet werden.

6. Messerfaltmaschine zur Durchführung des Verfahrens der Ansprüche 1 bis 5 mit gegenläufig bewegbaren Faltmessern (3), wobei durch die gegenläufige Bewegung der Faltmesser (3) beim Angriff an einer Filtermatte (1) jeweils ein Faltengrund (5) und ein dazu gegenüberliegender Faltenrücken (7) bildbar sind, während die Filtermatte (1) in einer Vorschubrichtung bewegt ist, **dadurch gekennzeichnet, dass** die Faltmesser (3) eine Sonotrode (11) aufweisen und ein Amboss (13) vorgesehen ist, gegen den ein Faltenrücken (7) mit dem Faltmesser (3) zum Bilden einer Schweißverbindung (15) zwischen dem Faltengrund (5) und dem Faltenrücken (7) durch Ultraschallenergie bewegbar ist.

## Claims

1. A method for producing a filter material, in particular for hydraulic systems, in which a filter mat (1) consisting of at least one ply (21) of a filter medium is provided with successive pleats by moving pleating blades (3) against one another, which pleating blades act on the filter mat (1) to form a respective pleat bottom (5), **characterised in that** when forming at least part of the pleats, a weld connection is formed between the pleat bottom (5) and the pleat top (7) by means of ultrasonic energy which is effective between the pleating blade (3) in question and a counter element (13) situated on the respective pleat top (7).

2. The method according to Claim 1, **characterised in that** the ultrasonic energy is generated by means of a sonotrode (11) situated on the pleating blade (3).

3. The method according to Claim 1 or 2, **characterised in that** the pleating blades (3) are moved against an anvil (13), as a counter element, abutting the pleat top (7) that is formed for the weld connections.

4. The method according to any of the preceding claims, **characterised in that** the weld connections are formed on all of the successive pleats.

5. The method according to any of the preceding claims, **characterised in that** weld connections are formed along at least part, preferably a majority, of the length (L) of the pleat top (7) and pleat bottom (5).

6. A blade pleating machine for implementing the method of Claims 1 to 5 with pleating blades (3) that can be moved in opposite directions, by means of the movement of the pleating blades (3) in opposite directions, upon acting on a filter mat (1) a pleat bottom (5) and a pleat top (7) lying opposite respectively being able to be formed, while the filter mat (1) is moved in a feed direction, **characterised in that** the pleating blades (3) have a sonotrode (11), and an anvil (13) is provided against which a pleat top (7) can be moved with the pleating blade (3) by means of ultrasonic energy to form a weld connection (15) between the pleat bottom (5) and the pleat top (7).

## Revendications

1. Procédé de fabrication d'une matière de filtration, notamment pour des installations hydrauliques, dans lequel on munit une nappe (1) filtrante, constituée d'au moins une couche (21) d'un milieu filtrant, de plis successifs en déplaçant les unes par rapport aux autres des lames (3) de pliage, qui, pour former un fond (5) de pli respectif, attaquent la nappe (1) filtrante, **caractérisé en ce que**, lors de la formation d'au moins une partie des plis, on forme une liaison de soudage entre un fond (5) de pli et un dos (7) de pli par une énergie ultrasonore, qui est active entre la lame (3) de pliage concernée et un élément (13) antagoniste se trouvant au dos (7) de pli respectif.

2. Procédé suivant la revendication 1, **caractérisé en ce que** l'on produit de l'énergie ultrasonore au moyen d'une sonotrode (11) se trouvant sur la lame (3) de pliage.

3. Procédé suivant la revendication 1 ou 2, **caractérisé en ce que** l'on déplace les lames (3) de pliage pour les liaisons de soudage contre, comme élément antagoniste, une enclume (13) s'appliquant au dos (7) de pli formé.

4. Procédé suivant l'une des revendications précédentes, **caractérisé en ce que** l'on forme les liaisons de soudage sur l'ensemble des plis successifs.

5. Procédé suivant l'une des revendications précédentes, **caractérisé en ce que** l'on forme des liaisons de soudage le long d'au moins une partie, de préférence une grande partie, de la longueur (L) du dos (7) des plis et du fond (5) des plis.

6. Machine de pliage par lame pour effectuer le procédé suivant les revendications 1 à 5, comprenant des lames (3) de pliage mobiles en sens contraire, dans laquelle, par le déplacement en sens contraire des lames (3) de pliage, il peut être formé à l'attaque d'une nappe (1) filtrante respectivement un fond (5) de pli et un dos (7) de pli qui lui est opposé, tandis que la nappe (1) filtrante est déplacée dans un sens d'avance, **caractérisée en ce que** les lames (3) de pliage ont une sonotrode (11) et il est prévu une enclume (13), contre laquelle un dos (7) de pli peut, avec la lame (3) de pliage, être déplacé par une énergie ultrasonore pour former une liaison (15) de soudage entre le fond (5) du pli et le dos (7) du pli.
